# EUROPÄISCHE PATENTSCHRIFT

(11) **EP 4 351 759 B1**
(45) Veröffentlichungstag und Bekanntmachung des Hinweises auf die Patenterteilung: **25.06.2025**
(21) Anmeldenummer: 22716324.3
(22) Anmeldetag: 28.03.2022
(51) Int. Cl.: B01D 46/00, B01D 46/121, B01D 46/58, B01D 39/18, B05B 14/43

(54) **ABSTANDSHALTER FÜR FILTER**
SPACER FOR FILTER
ESPACEUR POUR FILTRE

(30) Priorität: 10.06.2021 DE 102021114983
(43) Veröffentlichungstag der Anmeldung: 17.04.2024
(73) Patentinhaber: Jablonski, Michael, 45481 Mülheim a. d. Ruhr (DE)
(72) Erfinder: Jablonski, Michael, 45481 Mülheim a. d. Ruhr (DE)
(74) Vertreter: dompatent von Kreisler Selting Werner - Partnerschaft von Patent- und Rechtsanwälten mbB
(86) Internationale Anmeldenummer: PCT/DE2022/100235
(87) Internationale Veröffentlichungsnummer: WO 2022/258094

(56) Entgegenhaltungen:
- WO-A1-2016/186828
- US-A1- 2017 136 483
- US-B2- 9 555 358

## Beschreibung

Die Erfindung betrifft ein Filtermodul zum Abscheiden insbesondere von klebrigem und trockenem Lack- und/oder Kleberoverspray, Schleifstäuben etc., mit einer Filterkulisse in einem Filtergehäuse in Form eines aus mehreren Abschnitten gebildeten Einlegers zur Aufnahme eines Filtermediums, wobei in die Einlegerabschnitte schwenkbar ausgebildete Distanzplatten integriert sind, welche in einer ausgeschwenkten Position zumindest annähernd rechtwinklig zur Ebene des Einlegerabschnitts positioniert sind.

Solche Abscheidefilter sind hinlänglich bekannt, etwa aus der US 9 555 358. Sie umfassen ein in einem als Filtergehäuse ausgebildeten Umkarton positioniertes Filtermodul mit hintereinander angeordneten, plattenartigen Einlegern. Nicht zuletzt wegen der Beaufschlagung dieser Filter mit klebrigen und anderweitig problematischen Substanzen ist es zur Realisation einer Filterkulisse sehr zweckmäßig, Abstandshalter zwischen den das Filtermodul ausmachenden Einlegerabschnitten vorzusehen. Dort geht es um einen Abstandshalter, für den die perforierten Deckel des Umkartons genutzt werden. Jedoch hat sich diese Lösung vor dem Hintergrund als nicht zufriedenstellend erwiesen, dass diese Filtergehäuse sich nicht ausreichend zu Transportzwecken in ihren Abmessungen reduzieren lassen, was zu erheblichen zusätzlichen Kosten führt.

Die US 2017/136 481 A1 betrifft Filtermodule speziell für Automatie für Lackiersysteme mit Filtermodulen aus geschlitzten Papiergelegen, aus mehreren Abschnitten bestehenden Einlegern in entsprechenden Filtergehäusen. Vor der Faltung dienen Distanzplatten mit den übrigen Teilen des Einlegers. Somit sind die Distanzplatten zwischen einer bündig mit dem Einlegerabschnitt abschließenden eingeschränkten Position und der ausgeschwenkten Position verstellbar und die Einleger weisen stirnseitige Laschen und Schlitze auf, wobei im gefalteten Zustand die Laschen in korrespondierenden Schlitzen fixiert werden.

Damit stellt sich der vorliegenden Erfindung die Aufgabe, ein Filtermodul zum Abscheiden insbesondere von klebrigem und trockenem Lack- und/oder Kleberoverspray sowie Schleifstäuben Filterkulisse zu schaffen, das sich zu Transportzwecken in seinen Abmessungen reduzieren lässt.

Diese Aufgabe wird dadurch gelöst, dass zwischen einem Einlegerabschnitt und der Gehäusewand des Filtergehäuses zwei nebeneinander angeordnete, miteinander verkeilte Distanzplatten vorgesehen sind.

Dies wird vor allem dadurch erreicht, dass in die Einlegerabschnitte schwenkbar ausgebildete Distanzplatten integriert sind, welche in einer ausgeschwenkten Position zumindest annähernd rechtwinklig zur Ebene des Einlegerabschnitts positioniert sind und dadurch dem Einleger maßgeblich zu mehr Stabilität im Einbauzustand bei gleichzeitig geringem Raumbedarf während des Transportes zu verhelfen.

Der maßgebliche Vorteil solch eines Filtermoduls aus Wellpappe oder Kunststoff liegt in der Zuordnung der Distanzplatten zu den Einlegerabschnitten. Weil Distanzplatte und Einleger einteilig hergestellt sind, ist es vergleichsweise sehr einfach, die Distanzplatte in ihre ausgeschwenkte Position zu bringen, in der der entsprechende Abstand zwischen benachbarten Einlegerabschnitten sicher gewährleistet ist. Die zwei maßgeblichen Positionen für die Distanzplatten sind die ein- und die ausgeschwenkte, zwischen denen sie verstellbar ist. Bei der eingeschwenkten Distanzplatte ist diese gewissermaßen in selbige integriert, ohne überhaupt Platz zu beanspruchen, während die Distanzplatte in der ausgeschwenkten Position maximalen und sicheren, dauerhaften Abstand zwischen benachbarten Einlegerabschnitten oder zum Filtergehäuse verschafft.

Dabei empfiehlt es sich, wenn zwischen benachbarten Abschnitten des Einlegers im Einbauzustand eine lösbare Verbindung in Form der Distanzplatten und Aufnahmen für die Distanzplatten an diesen gegenüber liegenden Einlegerabschnitten vorgesehen ist, dass also die Distanzplatte aus der eingeschwenkten in die ausgeschwenkte Position geschwenkt wird, um dann eine lösbare Verbindung zwischen der Distanzplatte und der Aufnahme für diese auf dem gegenüberliegenden Einlegerabschnitt zu erreichen.

Nach einer vergleichsweise einfachen Ausführung weist die Distanzplatte eine stirnseitige Lasche als korrespondierendes Befestigungsmittel zu dem benachbarten Einlegerabschnitt auf. D.h. beim Installieren der erfindungsgemäßen Module stellt sich eine Verbindung zwischen den Laschen einerseits und den benachbarten Einlegerabschnitten andererseits her.

Konkret formuliert, die Filterplatte umfasst einen zu der gegenüberliegenden Distanzplatte korrespondierend angeordneten und ausgebildeten Schlitz.

Eine bevorzugte Ausführungsform bezieht sich darauf, dass zwischen den Einlegerabschnitten und der Gehäusewand zwei nebeneinander angeordnete Distanzplatten vorgesehen sind, was die entsprechende Verbindung beider Distanzplatten zusätzlich stabilisiert.

Es sind auch Konstellationen für solch einen Filter denkbar, bei denen nebeneinander angeordnete Distanzplatten miteinander verkeilt sind, wozu die erfindungsgemäßen Distanzplatten dank ihrer Ausbildung geeignet sind. Durch die Anordnung von Schlitzen kann eine leicht herzustellende und sichere Keilverbindung realisiert werden.

Es ist als zweckmäßig anzusehen, wenn die Filterplatten und Distanzplatten einteilig hergestellt sind. Wie bereits angesprochen wurde, werden die Distanzplatten gewissermaßen aus den Filterplatten herausgeschwenkt. Von daher macht es Sinn, die Stanzen gleich so vorzusehen, dass die Distanzplatten um eine Längsachse geschwenkt werden können.

Zur verbesserten Handhabung der Distanzplatte, insbesondere beim Ein- und Ausschwenken, sieht die Erfindung vor, dass die Distanzplatte sich zu ihrer Innenseite verjüngt. Somit kann der Bediener die Distanzplatte auch im eingebauten Zustand von dem Freiraum her wesentlich besser handhaben.

Eine solcher Einleger bildet die Konturen eines Buchstaben W ab und kann von daher auch als Zickzackeinleger bezeichnet werden. In diesem Sinne versteht sich der Vorschlag, wonach vier oder sechs Filterplatten als aufschwenkbare Vier- oder Sechsfachplatte ausgebildet sind. Diese sind konfiguriert, um unter Wahrung der für die Funktion der Filterkulisse notwendigen Abstände den Raum in dem Gehäuse aufzufüllen.

Es wurde auch bereits angesprochen, dass die Filterkulisse durch die beabstandet angeordneten Einleger gebildet ist. Vorteilhafte Anordnung ist dabei die, bei der benachbarte Einlegerabschnitte in einem spitzen Winkel zueinander angeordnet sind, führend zu dem Zickzackmuster. Dies lässt sich mit den erfindungsgemäßen Distanzplatten besonders gut bewerkstelligen, indem diese auf die konkrete Anwendung hin bereits vorgefertigt sind, sprich die Distanzplatte gibt die Winkel vor - bzw. umgekehrt.

Ergänzend dazu ist vorgesehen, dass als Abdichtung zwischen dem Filtermodul und dem Umkarton mindestes ein Vlies dient. Dazu wird der Vliesfilter auf dem Boden des Umkartons platziert und nach Einsetzen des Filtermoduls vor dem Verschließen des Umkartons wird ein zweiter auf dem Einleger platziert.

Dass ein Einlegerabschnitt mit mehreren Distanzplatten unterschiedlicher Abmessungen ausgerüstet ist, verbessert die Einsatzmöglichkeiten noch mehr, da ein Einleger incl. Distanzplatte den Gegebenheiten optimal ausgesucht und angepasst werden kann.

Offenbart ist außerdem ein Verfahren zur Installation eines zum Abscheiden insbesondere von klebrigem und trockenem Lack- und/oder Kleberoverspray, Schleifstäuben etc. dienenden Filtermoduls mit einer Filterkulisse in einem Filtergehäuse in Form eines aus mehreren Abschnitten gebildeten Einlegers zur Aufnahme eines als Filtermedium dienenden geschlitzten Papiergeleges.

Charakteristisch ist, dass die Papiergelege vor dem Einbau in das Filtermodul in Längsrichtung gedehnt werden. Den Gegebenheiten entsprechend kann auch eine Dehnung in die eigentliche Querrichtung erfolgen.

Die durch das Papierfiltergelege gebildeten Rollen werden nach ihrer Herstellung ungedehnt aufgewickelt, d. h. sie werden in geschlitzten, ungedehnten Rollen in verschiedenen Schnittbildern angeliefert. Diese haben im Vergleich zu einer fertigen, gedehnten Rolle den Vorteil eines deutlich verringerten Frachtvolumens dank der Papierfiltergelege, bestehend aus vorzugsweise acht Lagen (drei grobe, zwei mittelgrobe und drei feine Lagen). Das Papier wird also in geschlitzten, aber noch ungedehnten Rollen bezogen.

Überraschenderweise wurde in Versuchen festgestellt, dass gezielte Expansionen des Geleges in erheblichem Maße möglich sind. Lässt man die gestreckte Papierlage nach dem Dehnen entspannen, neigt das Gelege dazu, sich wieder auf seine ursprüngliche Länge zu reduzieren. In Bezug auf die Breite des Geleges, die sich beim Dehnen naturgemäß reduziert hat, tendiert das Gelege ebenso dazu, seine ursprüngliche Dimensionierung wieder anzunehmen. Es wurde in Versuchen erreicht, dass die Papiergelege in Längsrichtung um rund 25 % bis 125 %, vorzugsweise um rund 80 % gedehnt wird. In Querrichtung kann eine der durch das Dehnen in Längs- oder Arbeitsrichtung bedingte Stauchung von etwa 100% bis 150%, vorzugsweise von ca. 120% erreicht werden.

Dadurch dass das gestreckte/überdehnte Papier als einzelne, doppelte oder mehrlagige Bahn ausgebildet und in den Einleger gelegt ist, verhindert die vorgegebene Innenbreite des Einlegers das natürliche Zusammenziehen der eigentlich überdehnten Papierlagen, ohne dass ein Fixieren der einzelnen oder mehreren Papierlagen oder der gesamten Filterlage erforderlich ist, weder am Einleger noch am dahinterliegenden zweiten Vliesfilter. Vorteilhafterweise entfällt außerdem das Vernähen der einzelnen Papierlagen untereinander, indem die Papiergelege nach der Dehnung entspannt werden, wobei sich das Papiergelege unter Erzeugung eines Kralleffektes in Querrichtung in dem Filtergehäuse/Umkarton festsetzt und zwar dadurch, dass die Breite des Einlegers das Papiergelege in seiner natürlichen Entspannung beschränkt.

Die Erfindung zeichnet sich insbesondere dadurch aus, dass ein Filtermodul aus Wellpappe und/oder Kunststoff mit einer Filterkulisse in Form einer Mehrzahl beabstandet hintereinander angeordneter Einlegerabschnitte geschaffen ist, das zum Abscheiden von klebrigem oder trockenem Lack- oder Kleberoverspray sowie Schleifstäuben bei minimalem Platzbedarf während des Transportes besonders geeignet ist. Vorteilhaft sind hier die Einleger in Form von käfigartigen, mit einem Filtermedium befüllten Abschnitten. Das Filtermedium besteht aus einer, zwei oder mehrerer gleicher oder unterschiedlicher Filtermatten, beispielsweise aus Papiergelegen oder Vliesfiltern aus Polyester oder Glasfaser oder dergleichen.

Integrierte Distanzplatten, die, sofern sie nicht eingesetzt werden, z.B. beim Transport, bündig mit der Wandung der Filterplatte abschließen oder sich zwischen den beiden Einsatzpositionen befinden, werden für den Gebrauchszustand denkbar einfach aus der Filterplatte herausgeklappt. Die Distanzplatten werden dann mit den benachbarten Einlegerabschnitten fixiert bzw. verkeilt.

Ein solcher Einleger aus Wellpappe oder Kunststoff besteht fertigungsbedingt aus zwei Teilen. Das durchgängige Filtermaterial verbindet dabei die beiden Einlegerabschnitte. Dabei muss mindestens eine der aufeinander gelegt kombinierbaren mattenartigen Filtermedien an einem Stück durchgängig sein. Es können gestückelte Papiergelege-Filtermatten verwendet werden, die bisher umständlich zusammengenäht werden mussten. Ein Arbeitsgang, der zukünftig entfallen kann. Das gerade angesprochene, an beiden Enden überlappende Filtermaterial ist zwingend notwendig, weil es nicht am Einleger fixiert sein muss und durch das Zickzackfalten des Einlegers durch die Überdehnung staucht und sich dadurch die gesamte Länge der Matte in Gänze verkürzt. Zudem dienen die Überlappungen beim Einsetzen des gesamten gefalteten Einlegers in den Umkarton/Filtergehäuse als Abdichtungen in den vorderen beiden Ecken von Umkarton/Filtergehäuse. Bei diesen Einlegern sind immer nur zwei Einlegerabschnitte miteinander verbunden und die Durchgängigkeit des gesamten Einlegers wird über den Versatz vorne/hinten hergestellt. Das Aufbrechen der rückseitig gebogenen Wendehälse führt zur Überdehnung des Materials und damit zur gleichzeitigen Stauchung des gesamten Filters.

Die Papiergelege werden in geschlitztem und vorgedehnten Zustand angeliefert, woraufhin vor Ort, d. h. im Rahmen des Zusammenbaus des Filters eine Expansion durchgeführt wird, die dazu führt, dass sich das Material zusammenstaucht. Lässt man es dann entspannen, tendiert es dazu, sich wieder auf die ursprünglichen Maße auszuweiten. Wenn das gestreckte/überdehnte Papier in den Einleger gelegt wird, verhindert die Kontur des Einlegers das natürliche Zusammenziehen der zuvor überdehnten Papierlagen zurück.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Filtermodul in perspektivischer Ansicht
- Figur 2: das Modul nach Figur 1 in Draufsicht
- Figur 3: ein Modul mit weiteren Distanzplatten in Rückansicht
- Figur 4: das Filtermodul nach Figur 3 in Vorderansicht
- Figur 5: ein Modul vor der Montage
- Figur 6-8: jeweils ein Filtermodul in verschiedenen Montagezuständen
- Figur 9: ein Filtergehäuse mit Filtermedium in Vorderansicht und
- Figur 10: ein Filtergehäuse mit Filtermedium in Rückansicht.

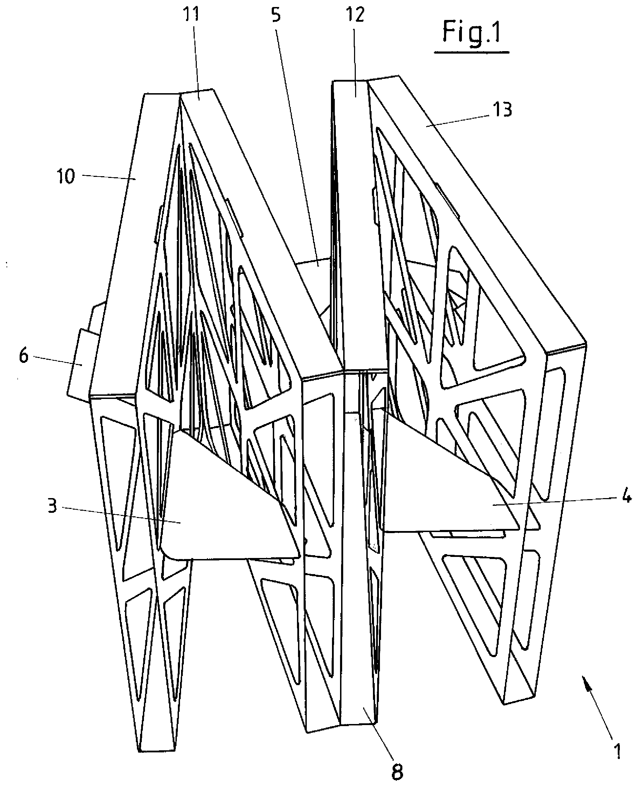

Figur 1 zeigt ein Filtermodul 1 mit einem Einleger 8 in Form von vier Einlegerabschnitten 10-13. Diese umfassen käfigartig das hier nicht dargestellte Filtermedium in Form von Filtermatten. Hintereinander und in spitzem Winkel und in Art eines W zueinander angeordnet, geben die schwenkbar verbundenen Einlegerabschnitte 10-13 die Filterkulisse vor. Mit den Bezugszeichen 3, 4 sind Distanzplatten zwischen den Einlegerabschnitten 10 und 11, bzw. 12 und 13 bezeichnet. Die Distanzplatten 3, 4 sind aus der Ebene der jeweiligen Einlegerabschnitte 10 und 12 herausgeklappt und an dem gegenüberliegenden Einlegerabschnitt 11, 13 eingeklinkt.

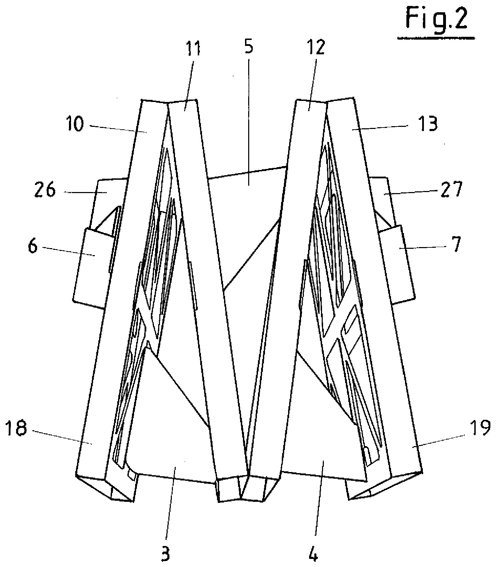

In der Draufsicht nach Figur 2 ist neben den Distanzplatten 3 und 4 zwischen den Einlegern 10 und 11 bzw. 12 und 13 auch die Distanzplatte 5 zwischen den Einlegerabschnitten 11 und 12 zu erkennen. Die beiden Distanzplatten 3 und 4 wiederum dienen zur Vorgabe des Winkels zwischen den Einlegeabschnitten 10, 11 bzw. 12, 13. Außerdem befinden sich Distanzplatten 6, 26 und 7, 27 an den Außenseiten 18, 19 der Einlegerabschnitte 10 und 13.

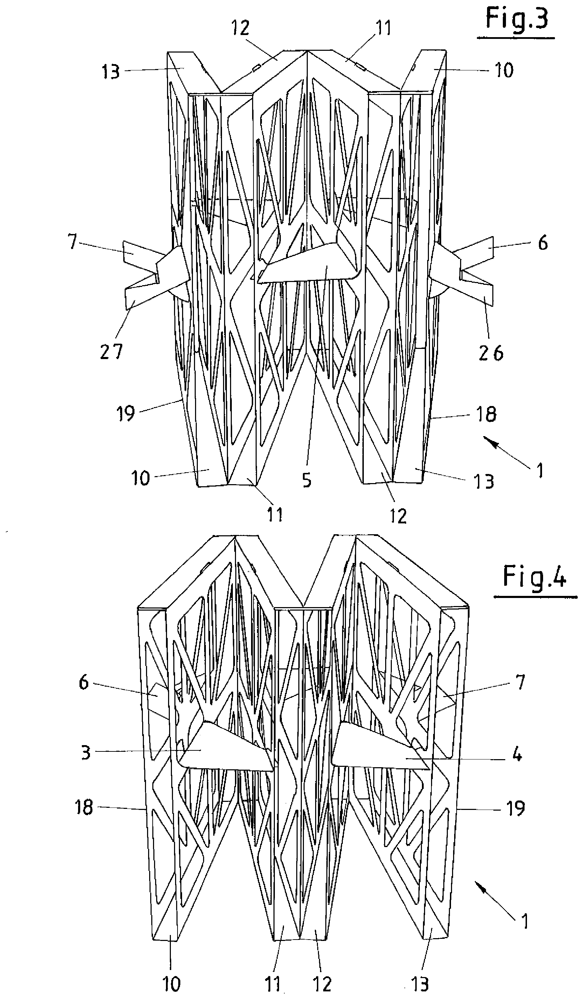

In Rückansicht zeigt Figur 3 das Filtermodul 1, gebildet aus den Einlegerabschnitten 10-13 mit Distanzplatten 6, 26, 7, 27 an der Außenseite 18, 19 der Einleger 10, 13. Die doppelte Distanzplatte 6, 26, 7, 27 ist durch miteinander verkeilte Distanzplatten an der Außenseite 18, 19 geschaffen.

In Ansicht von vorne zeigt Figur 4 das entsprechende Filtermodul 1 mit den Distanzplatten 3, 4 zwischen den Einlegern/Filterplatten 10, 11 bzw. 12, 13.

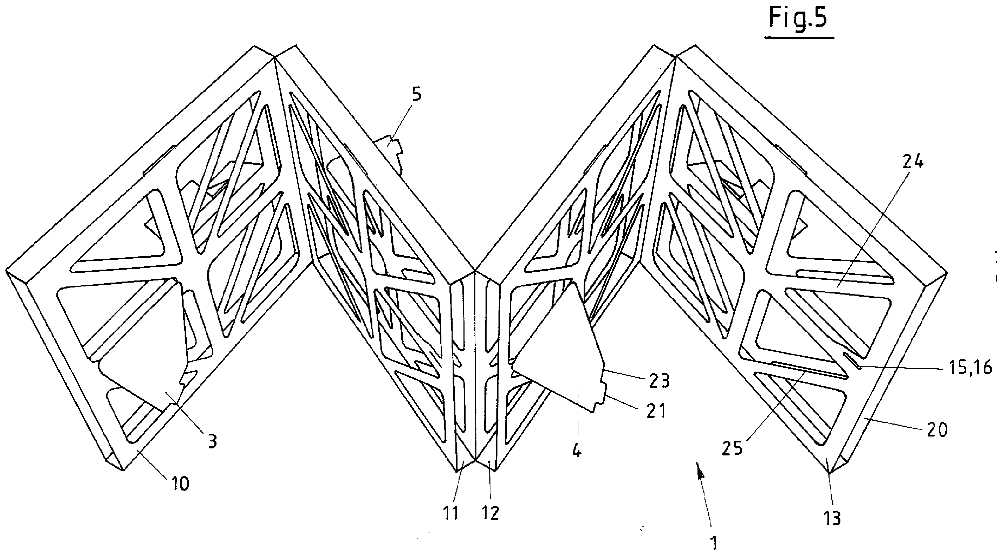

Der Aufbau eines solchen Filtermoduls 1 als aus im Wesentlichen vier Einlegerabschnitten 10-13 bestehenden Moduls veranschaulicht dann Figur 5 mit den aus der Ebene der Einleger 10-13 herausgeklappten Distanzplatten 3, 4, von links nach rechts betrachtet. Exemplarisch wird auf die Lasche 21 an der Stirnseite 23 der mit 4 bezeichneten Distanzplatte hingewiesen. Diese Lasche korrespondiert mit der als Schlitz 15 ausgebildeten Aufnahme 16 an der dem Einlegeabschnitt 13 zugewandten Innenseite 20 des Einlegerabschnitts 10. Solch ein Filtermodul 1 ist so bemessen und ausgebildet, dass eine hier nicht dargestellte Filtermatte eingesetzt werden kann. Eine solcher Einlegerabschnitt 10 umfasst dazu mehrere Streben, hier beispielhaft mit den Bezugszeichen 24 und 25 versehen, welche als eine Art Käfig für die Filtermatte dienen.

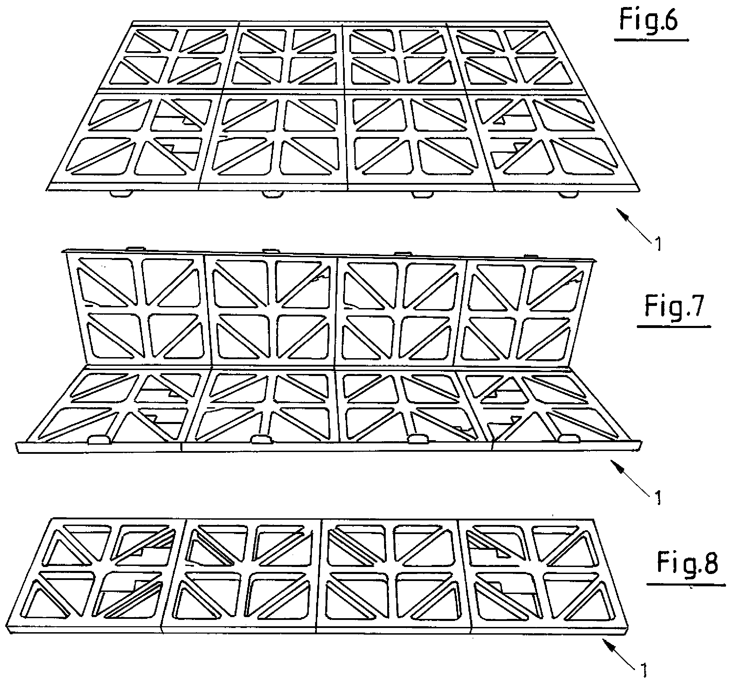

Zusätzlich zeigen die Figuren 6, 7 und 8 ein Filtermodul bei der Montage. Dazu stellt Figur 6 das Filtermodul 1 komplett ausgeklappt dar, Figur 7 das Filtermodul 1 beim Einklappen und Figur 8 dann in eingeklapptem Zustand.

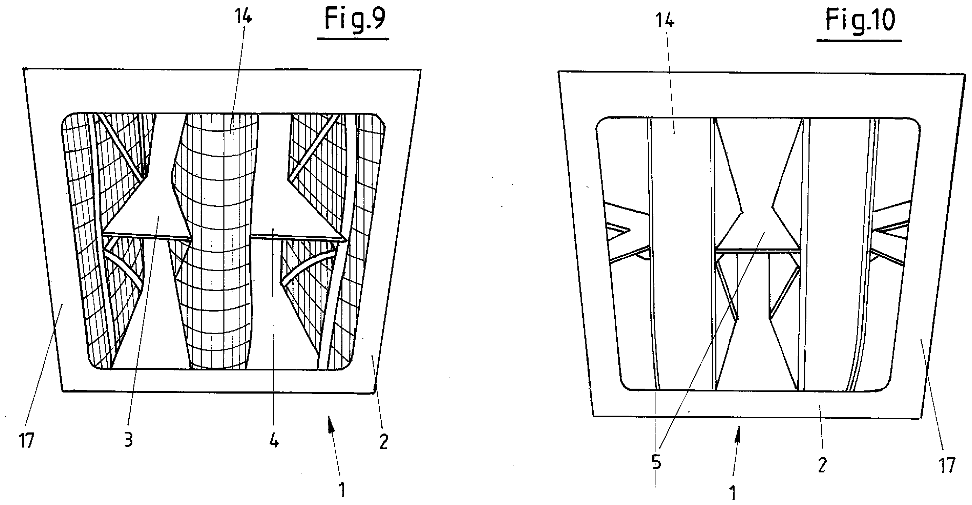

Schließlich zeigen Figur 9 und 10 ein Filtergehäuse 2 in Form eines Umkartons mit der Gehäusewand 17 für das Filtermedium 14 in Art einer Filtermatte. Die überlappenden Enden des Filtermaterials dichten den Einleger über die Höhe des Kartonfilters an den vorderen inneren Ecken des Umkartons 2 ab, die Abstandshalter 3-5 halten den Einleger 8 stabil 2 im Umkarton platziert und sorgen auch dafür, dass sämtliche Einlegerabschnitte als Filterfläche durchströmt werden und damit funktionell zur Abscheidung beitragen.

## Patentansprüche

1. Filtermodul (1) zum Abscheiden insbesondere von klebrigem und trockenem Lack- und/oder Kleberoverspray, Schleifstäuben etc., mit einer Filterkulisse in einem Filtergehäuse (2) in Form eines aus mehreren Abschnitten (10-13) gebildeten Einlegers (8) zur Aufnahme eines Filtermediums (14), wobei in die Einlegerabschnitte (10-13) schwenkbar ausgebildete Distanzplatten (3-7) integriert sind, welche in einer ausgeschwenkten Position zumindest annähernd rechtwinklig zur Ebene des Einlegerabschnitts (10 -13) positioniert sind,
**dadurch gekennzeichnet,**
**dass** zwischen einem Einlegerabschnitt (10, 13) und der Gehäusewand (17) des Filtergehäuses (2) zwei nebeneinander angeordnete, miteinander verkeilte Distanzplatten (6, 26, 7, 27) vorgesehen sind.

2. Filtermodul nach Anspruch 1,
**dadurch gekennzeichnet,**
**dass** die Distanzplatten (3-7) zwischen einer bündig mit dem Einlegerabschnitt (10 -13) abschließenden eingeschwenkten Position und der ausgeschwenkten Position verstellbar sind.

3. Filtermodul nach Anspruch 1,
**dadurch gekennzeichnet,**
**dass** zwischen benachbarten Abschnitten (10-13) des Einlegers (8) im Einbauzustand eine lösbare Verbindung in Form der Distanzplatten (4) und Aufnahmen (16) für die Distanzplatten (4) vorgesehen ist

4. Filtermodul nach Anspruch 1,
**dadurch gekennzeichnet,**
**dass** die Distanzplatte (3) eine stirnseitige Lasche (21) aufweist.

5. Filtermodul nach Anspruch 1,
**dadurch gekennzeichnet,**
**dass** die Einlegerabschnitte (13) zu der gegenüber liegenden Distanzplatte (4) korrespondierend angeordnete und ausgebildete Schlitze (15) umfassen.

6. Filtermodul nach Anspruch 1,
**dadurch gekennzeichnet,**
**dass** Einleger (8) und Distanzplatten (3-7) einteilig hergestellt sind.

7. Filtermodul nach Anspruch 1,
**dadurch gekennzeichnet,**
**dass** die Distanzplatte (3-7) sich zu ihrer Innenseite (26) verjüngt.

8. Filtermodul nach Anspruch 1,
**dadurch gekennzeichnet,**
**dass** als Abdichtung zwischen dem Filtermodul (1) und dem Filtergehäuse (2) ein Vlies dient.

9. Filtermodul nach Anspruch 1,
**dadurch gekennzeichnet,**
**dass** ein Einlegerabschnitt (10-13) mit mehreren Distanzplatten (3-7) unterschiedlicher Abmessungen und/oder Positionierungen ausgerüstet ist.

10. Filtermodul nach Anspruch 1,
**dadurch gekennzeichnet,**
**dass** das als Filtermedium dienende Papiergelege einzelne, doppelte oder mehrlagige Bahnen umfasst.

## Claims

1. Filter module (1) for separating in particular sticky and dry paint and/or adhesive overspray, abrasive dusts etc., with a filter arrangement in a filter housing (2) in the form of an inlay (8) for receiving a filter medium (14), said inlay consisting of a plurality of sections (10-13), wherein pivotable spacer plates (3-7) are integrated in the inlay sections (10-13), which, in a swiveled-out position, are positioned at least approximately at right angles with the plane of the inlay section (10-13),
**characterized in that**
two spacer plates (6, 26, 7, 27) arranged side by side and wedged together are provided between an inlay section (10, 13) and the housing wall (17) of the filter housing (2).

2. Filter module according to claim 1, **characterized in that** the spacer plates (3-7) are adjustable between a swiveled-in position flush with the inlay section (10-13) and the swiveled-out position.

3. Filter module according to claim 1, **characterized in that** in the mounted state, a detachable connection is provided between adjacent sections (10-13) of the inlay (8), which connection is in the form of the spacer plates (4) and receptacles (16) for the spacer plates (4).

4. Filter module according to claim 1, **characterized in that** the spacer plate (3) comprises a tab (21) on the end face.

5. Filter module according to claim 1, **characterized in that** the inlay sections (13) comprise slots (15) arranged and formed corresponding to the opposite spacer plate (4).

6. Filter module according to claim 1, **characterized in that** inlays (8) and spacer plates (3-7) are formed integrally.

7. Filter module according to claim 1, **characterized in that** the spacer plate (3-7) tapers towards its inner side (26).

8. Filter module according to claim 1, **characterized in that** a nonwoven material serves as a seal between the filter module (1) and the filter housing (2).

9. Filter module according to claim 1, **characterized in that** an inlay section (10-13) is equipped with a plurality of spacer plates (3-7) of different dimensions and/or positions.

10. Filter module according to claim 1, **characterized in that** the multilayer paper assembly serving as a filter medium comprises a single sheet, double or multilayer sheets.

## Revendications

1. Module de filtre (1) pour séparer notamment d'excès de spray collant et sec de vernis et/ou de colle, de poussières de ponçage etc., comprenant une coulisse de filtre dans un corps de filtre (2) sous la forme d'un insert (8) formé de plusieurs sections (10 à 13) et destiné à recevoir un moyen filtrant (14), des plaques de distance (3 à 7) conçues pivotantes étant intégrées dans les sections d'insert (10 à 13) et étant positionnées dans une position au moins approximativement perpendiculaire au plan de la section d'insert (10 à 13) lorsqu'elles sont dans une position pivotée vers l'extérieur,
**caractérisé en ce que**,
entre une section d'insert (10, 13) et la paroi de corps (17) du corps de filtre (2), deux plaques de distance (6, 26, 7, 27) disposées l'une à côté de l'autre et emboîtées l'une dans l'autre sont prévues.

2. Module de filtre selon la revendication 1, **caractérisé en ce que** les plaques de distance (3 à 7) sont réglables entre une position pivotée vers l'intérieur où elles affleurent avec la section d'insert (10 à 13), et la position pivotée vers l'extérieur.

3. Module de filtre selon la revendication 1, **caractérisé en ce que**, en l'état monté, entre des sections avoisinantes (10 à 13) de l'insert (8), une liaison amovible est prévue sous la forme des plaques de distance (4) et des agencements (16) pour recevoir les plaques de distance (4).

4. Module de filtre selon la revendication 1, **caractérisé en ce que** la plaque de distance (3) comprend une languette (21) du côté frontal.

5. Module de filtre selon la revendication 1, **caractérisé en ce que** les sections d'insert (13) comprennent des fentes (15) disposées et formées de façon à correspondre à la plaque de distance (4) située en face.

6. Module de filtre selon la revendication 1, **caractérisé en ce que** l'insert (8) et les plaques de distance (3 à 7) sont fabriqués d'une seule pièce.

7. Module de filtre selon la revendication 1, **caractérisé en ce que** la plaque de distance (3 à 7) se rétrécie vers sa face intérieure (26).

8. Module de filtre selon la revendication 1, **caractérisé en ce qu'**un matériau non tissé sert comme étanchement entre le module de filtre (1) et le corps de filtre (2).

9. Module de filtre selon la revendication 1, **caractérisé en ce qu'**une section d'insert (10 à 13) est pourvue de plusieurs plaques de distance (3 à 7) ayant des dimensions et/ou positionnements différents.

10. Module de filtre selon la revendication 1, **caractérisé en ce que** le dépôt de papier servant comme moyen de filtration comprend des lés individuels, doubles ou à plusieurs couches.
